# EUROPEAN PATENT SPECIFICATION

(11) **EP 1 654 919 B1**
(45) Date of publication and mention of the grant of the patent: **25.02.2009**
(21) Application number: 05004277.9
(22) Date of filing: 28.02.2005
(51) Int. Cl.: A01B 49/04, A01B 49/06, A01B 49/02

(54) **Agricultural machine for incorporating liquid substances into the soil**
Landmaschine zur Einarbeitung von flüssigen Substanzen in den Boden
Machine agricole pour incorporer des substances liquides dans le sol

(30) Priority: 05.11.2004 IT MI20042124
(43) Date of publication of application: 10.05.2006
(73) Proprietor: ROTER ITALIA S.r.l., 37056 Bionde Di Salizzole (VR) (IT)
(72) Inventor: Forigo, Sandro, 46035 Ostiglia (MN) (IT)
(74) Representative: Savi, Alberto

(56) References cited:
- EP-A- 1 477 610
- GB-A- 1 136 145
- GB-A- 1 213 207
- GB-A- 2 021 373
- US-A- 3 685 468
- US-A- 4 211 175
- US-A- 5 070 946

## Description

This invention relates to a machine designed to perform a complete spray treatment of agricultural land by incorporating in the soil liquid substances such as plant protection products, weedkillers, fertilisers and soil conditioners. The machine according to the invention is suitable in particular for treatments, such as fumigation of agricultural land, which involve incorporating into the soil liquid substances that subsequently evaporate and perform their function in the gaseous state. Said substances require the creation of a barrier layer, obtained by compacting the topsoil immediately after spraying, which constitutes an obstacle to the dispersion of vapours in the atmosphere so that said vapours remain in the soil for as long as possible.

Fumigation treatment is traditionally performed in three stages, using irrigation bars or weedkiller sprayers, or directly injecting the fumigants into the soil by hand. The first operation involves tilling of the soil with placement units (also known as stone-burying machines). This is followed by spraying of the soil, which must be followed very rapidly by compacting of the soil, usually by rolling, so as to create if not a barrier, at least an obstacle to the gases that develop from said fumigants.

A first drawback of the procedure described is that said three stages involve very long working times.

A second drawback is that the application is not particularly uniform, especially when performed with weedkiller sprayers, and above all when the fumigants are directly injected into the soil by hand. This drawback means that a larger quantity of fumigants has to be used.

A third drawback is that the soil is compacted at a later stage, with the result that the creation of the gas barrier takes place after spraying; consequently, part of said gas is dispersed directly into the atmosphere without performing its function, with the result that a larger amount of fumigants needs to be used.

A fourth drawback is that the personnel who perform the work are obliged to remain for a long time in the areas in which said fumigants, which are harmful to the health, are sprayed, and to make a second pass in areas where said fumigants have already begun to evaporate, in the absence of a barrier that obstructs them from being emitted into the atmosphere. In practice, said fumigants are sprayed onto the soil in liquid form, and the operator is obliged to pass through the sprayed area again when the evaporation process is well under way.

The purpose of this invention is to eliminate said drawbacks by offering a machine as claimed in claim 1, which is designed to spray and compact the soil in a single step. Said machine will also advantageously be able to till the soil, in order to complete the operations in a single pass.

The most obvious consequence of this design of the machine is that the soil, which is compacted immediately after spraying, forms an effective barrier to the gases that develop, thus providing the ideal treatment conditions. This offers the advantage of reducing consumption of the fumigants used, and greatly reducing the time during which the operator is subject to the action of said fumigants.

Compacting of the soil, which creates a barrier to the escape of the gases formed immediately after spraying, almost entirely obstructs dispersion while the operator is in the area sprayed; moreover, the operator is not obliged to pass over the sprayed soil again. The fact that said operations are performed by a single machine also means that spraying is more uniform, leading to a further significant reduction in fumigant consumption.

In practice, savings of 20+25% can be obtained.

As the fumigants used are still dispersed in the environment after performing their function, lower fumigant consumption obviously also reduces their environmental impact. A machine according to the preamble of claim 1 is known from US-A-4 211 175.

The invention will now be described according to a preferred form of embodiment, by reference to the annexed figures, wherein:
- figures 1 (a, b) are the side view and front view respectively of the machine according to the invention;
- figure 2 is an enlargement of the side view;
- figure 3 shows the nozzle support and protection unit designed to spray the liquid soil-treatment substances;
- figure 4 shows a device for regulating the output rate of the fluid from the nozzles:

- figure 5 shows a detail of the soil compacting roller;
- figure 6 shows an additional nozzle for spraying the liquid soil-treatment substances;
- figure 7 shows a pump designed to deliver the fluid to be sprayed to the nozzles;
- figure 8 shows a computerised control unit.

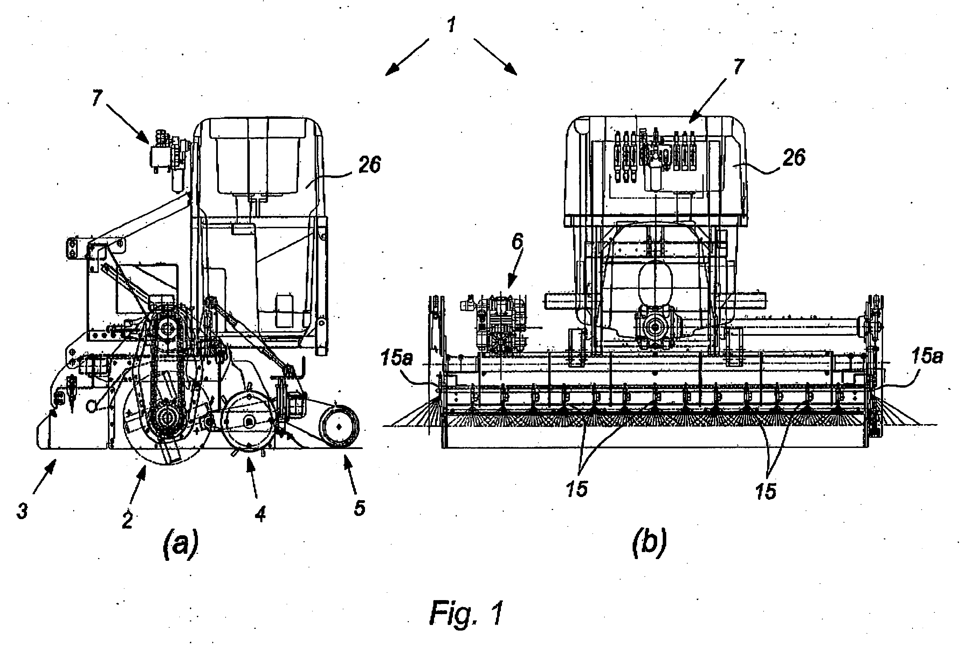

In fig. 1, number (1) indicates a preferred embodiment of a machine according to the invention, which consists of a set of parts designed to perform the functions of tilling, spraying and compacting of the soil, which said set of parts is rendered operational by connection to the power take-off of a tractor after the machine has been coupled to the three-point linkage, as in the case of the vast majority of agricultural machines.

Machine (1) according to the invention is shown in a side view (fig. 1a) and a front view (fig. 1 b). Said machine (1) substantially comprises soil tilling means (2), soil spraying means 13), means (4) for regulating the flow rate of the fluid sprayed onto the soil, soil compacting means (5), means (6) for supplying fluid to said spraying means (3), and means (7) for the computerised control of the operation of said machine (1) according to the invention.

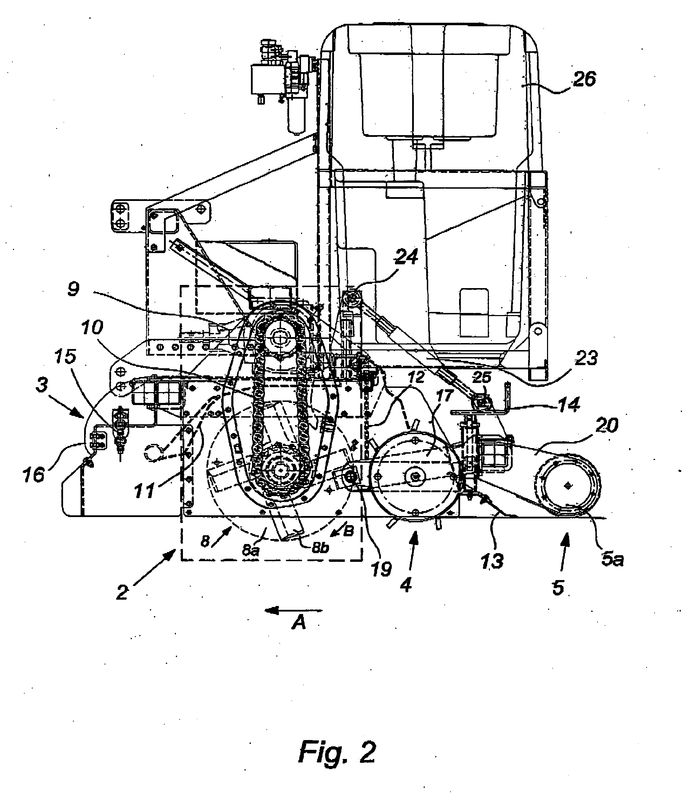

Said soil tilling means (2), shown in greater detail in fig. 2, comprise a placement unit of known type (8) (namely a rotary cultivator with a horizontal axis, with the tools rotating in the opposite direction to the tractor wheels), equipped with a plurality of flanges (8a) to which are fitted mattocks (8b) with an angular profile.

While the machine, pulled by the tractor, advances in the direction indicated by arrow (A), blades (8) rotate in the direction indicated by arrow (B) and project the broken-up soil against a guard (11), which preferably has a double base so that it more effectively withstands shocks from the stones thrown up by rotary tiller (8).

Guard (11) and the rotation of tiller (8) guide the soil towards a rear grid (12), preferably fitted to elastic supports, which more effectively absorb shocks from the stones. Grid (12) is also subjected to vibration so that it remains clean and clear, even when operating on damp soil.

Grid (12) is preferably the rapid extraction type so that the distance between the teeth of said grid can easily be changed in order to obtain different sieving effects, depending on the characteristics of the soil.

A levelling bar (13) is positioned behind the grid, in the direction of travel of the machine, the height of which said bar can be adjusted by manually regulating two side handles (14). Said levelling bar levels the soil raised and broken up by rotary tiller (8).

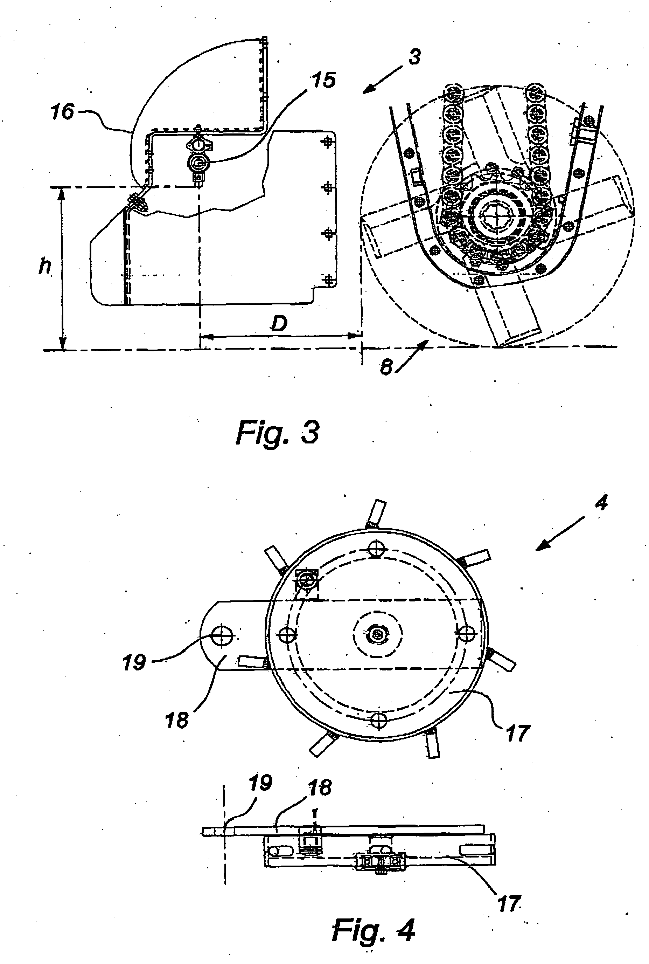

Soil spraying means (3) (figs. 1, 2 and 3) are positioned in front of rotary tiller (8). Said means comprise a plurality of nozzles (15) aligned along a horizontal axis perpendicular to the direction of travel, which said nozzles (15) are protected by a guard (16) that contains them.

As nozzles (15) are positioned in front of rotary tiller (8), they spray the liquid product onto soil which is still compact, but is immediately broken up and mixed by rotary tiller (8); consequently, the time that elapses between the moment when the product is sprayed and the moment when the soil is mixed and re-compacted is approximately 3+4 tenths of a second, depending on the rate of advance of the tractor. The operations can therefore be said to be simultaneous for all practical purposes.

Said nozzles (15) can be positioned at a distance D preferably comprised between 50 and 500 mm with respect to the external profile of the rotary tiller (8) and at an height h preferably comprised between 200 and 450 mm with respect to ground level, with quiescent machine over the ground. The choice depends on soil kind and machine dimensions.

According to a first preferred embodiment, -said nozzles (15) can be positioned in such a way to horizontally spray toward the rotary tiller (8).

According to a second preferred embodiment, said nozzles (15) can be positioned above the rotary tiller (8) and spray on said rotary tiller.

Other means suitable to spray soil can substitute said nozzles (15), for example a perforated tube, mounted in the same positions. In such a case the liquid will be only vertically sprayed.

Means (4), which regulate the flow rate of the fluid sprayed onto the soil, are positioned on the side of the machine. Said means (4) comprise an idler gear (17), fitted to an arm (18) which oscillates in relation to an axis (19) parallel to the ground and perpendicular to the direction of advance of the machine.

Thus wheel (17) is caused to rotate by the advance of the machine, and is able to measure its rate of advance by means of a device of known type such as an encoder or a tachogenerator which is designed to emit signals according to the rotation speed of said wheel (17), said signals being interpreted by said means (7) for computerised control of the operation of said machine (1).

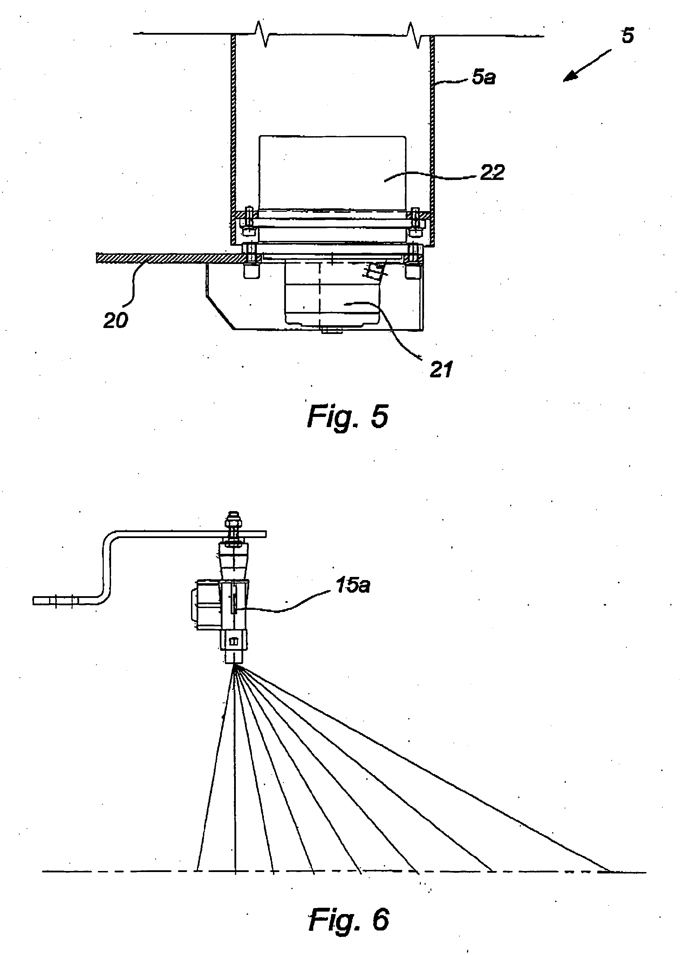

A smooth compacting roller (5a), mounted in such a way as to oscillate on two arms (20) which have their fulcrum on said horizontal axis (19), is positioned downstream of said levelling bar (13). Roller (5a) completes the levelling action and compresses the soil, the compression action being preferably boosted by the rotation of said roller (5a), which is preferably driven by a hydraulic unit comprising an orbital motor (21) with epicyclic reduction gear (22) (fig. 5). The direction of rotation of roller (5a) is equal to that of the tractor wheel during advance.

Roller (5a), which preferably has a working width greater than that of the rotary tiller, can traverse on both sides, projecting from the machine by approx. 200 mm, so as to eliminate the ridge that tends to form between two adjacent passes without constituting an obstacle to passages close to greenhouse pillars.

The working depth is regulated by adjusting the three-point linkage of the tractor and the position of the rear roller (5a), which is regulated by adjusting said two oscillating arms (20), which are easily accessed by the operator, who performs the regulation by adjusting a sleeve (23) internally threaded with two opposite threads, which is positioned between a fixed point (24) of the chassis of the machine and a point (25) integral with said oscillating arms (17) that support said roller (5a).

The machine according to the invention can be advantageously fitted with a pair of spray nozzles (15a) (fig. 6) which are aligned with said nozzles (15) and project by a few centimetres from the machine to increase its range of action.

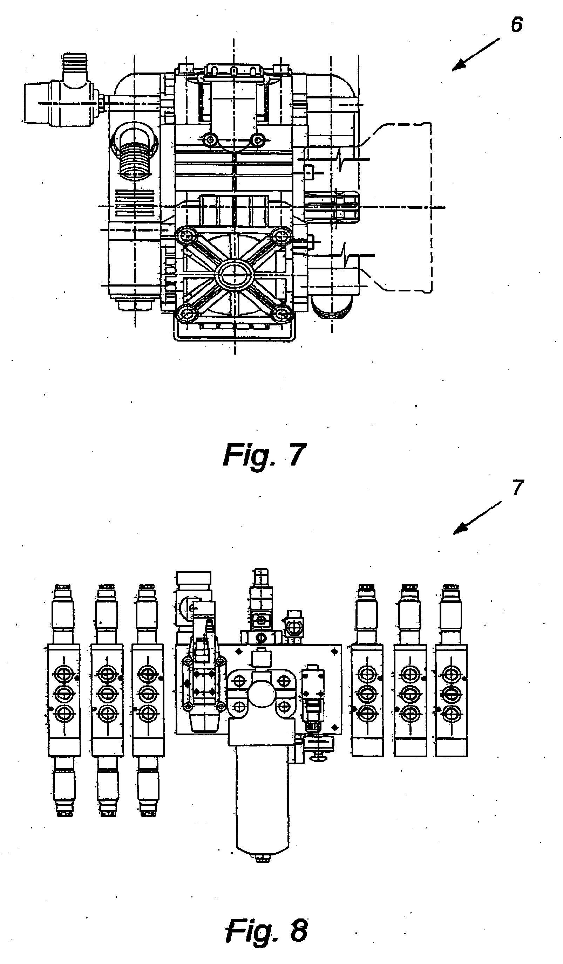

The liquid to be sprayed, contained in a tank (26) made, for example, of polyethylene obtained by rotational moulding, is conveyed under pressure to nozzles (15) and (15a) by said means (6), constituted by a pump such as a diaphragm pump. Said pump (fig. 7), which has a flow rate of up to 100 +150 I/min and can exert a pressure of 15 bars, required to obtain suitable pulverisation of the fluid jet, is controlled by said means (7) designed for computerised control of the operation of the machine (fig. 8).

Said means (7) comprise a computer which, being connected to said device for measuring the rotation speed of said wheel (17), is able to determine the pressure and flow rate parameters of the pump in order to optimise the spraying processes.

In other words, the operator only needs to drive the tractor that tows the machine, while machine (1) according to the invention performs all the operations and automatically regulates the quantity of product sprayed depending on its speed, interrupting spraying if the tractor has to stop for any reason.

As the machine according to the invention enables the operation to be completed in one or two passes, it achieves the new result of not requiring the operator to pass over the sprayed soil again for the compacting operation, thus achieving the main result, namely safeguarding the operator's health, together with a reduction in environmental impact and cost, due to the smaller amount of potentially harmful substances used.

## Claims

1. Machine for the treatment of agricultural land by spraying and incorporation in the soil of liquid substances such as plant protection products, weedkillers, fertilisers and soil conditioners, of the type comprising:
• means (3) designed to spray said soil with said liquid substances;
• means (8) designed to break up said soil and mix it with said sprayed liquid substances;
• means (5) designed to compact said sprayed soil, thus creating a compact crust which prevents the exit of the fumes generated by the evaporation of said liquid substances sprayed by said means (3);
**characterised in that** said means (8) designed to break up said soil and mix it with said sprayed liquid substances includes a stone-burying machine.

2. Machine as claimed in claim 1, **characterised in that** said means (3) designed to spray the soil are positioned upstream of said means (8) designed to break up the soil.

3. Machine as claimed in claim 1, **characterised in that** said means (3) designed to spray the soil are protected by a guard (16) that contains them.

4. Machine as claimed in claim 2 or 3, **characterised in that** said means (3) designed to spray the soil are at a distance D from said means (8) comprised between 50 and 500 mm and at an height h, with respect to ground level, with quiescent machine over the ground, comprised between 200 and 450 mm.

5. Machine as claimed in claim 1, **characterised in that** said means (3) designed to spray the soil are positioned above said means (8) designed to break up the soil.

6. Machine as claimed in claim 1, **characterised in that** said means (3) designed to spray the soil are positioned between said means (8) designed to break up the soil and a rear grid (12) towards which the broken up soil is projected.

7. Machine as claimed in any of the claims 1 to 6, **characterised in that** said means (3) designed to spray the soil comprise a plurality of nozzles (15) fed by a pump (6) which takes up the fluid to be introduced into the soil from a tank (26) and conveys it under pressure to said plurality of nozzles (15).

8. Machine as claimed in claims 1 to 7, **characterised in that** said plurality of nozzles (15) is positioned in such a way to spray toward the rotary tiller (8).

9. Machine as claimed in claims 1 and 7, **characterised in that** said means (3) designed to spray the soil also comprise a pair of lateral nozzles (15a).

10. Machine as claimed in any of the preceding claims, **characterised in that** said means (5) designed to compact said soil, thus creating a compact crust that obstructs the escape of the vapours generated by evaporation of said liquid sprayed by said means (3), comprise a roller (5a) which is kept pressed onto the soil.

11. Machine as claimed in claim 10, **characterised in that** said roller (5a) is motor-driven so that it rotates in the same direction of rotation as the wheel of the tractor that pulls it.

12. Machine as claimed in any of the preceding claims, **characterised in that** it also includes means (4) designed to regulate the flow rate of the fluid sprayed onto the soil.

13. Machine as claimed in claim 12, **characterised in that** said means (4) designed to regulate the flow rate of the fluid sprayed onto the soil comprise a wheel (17) which is kept pressed onto the soil, which said wheel is fitted to swivel on a support (18) connected to the chassis of the machine, in such a way that said wheel (17) is caused to rotate by engagement with the soil as it is pulled by the machine, and which said wheel is connected to means designed to emit a signal depending on its rotation speed, said signal being detected by means (7) for the computerised control of the operation of the machine.

14. Machine as claimed in claim 1 or 12 **characterised in that** said means (7) for the computerised control of the operation of the machine comprise a computer designed to receive signals originating from said means (4) designed to regulate the flow rate of the fluid to feed said means (3) designed to process spray the soil, process them to determine the flow rate of the fluid to be sprayed, and control said pump (6) to feed said nozzles (15) and (15a).

## Patentansprüche

1. Maschine für die Aufbereitung von landwirtschaftlichen Nutzflächen durch Besprühen und Beimischen in den Boden von flüssigen Substanzen wie Pflanzenschutzmittel, Wuchsstoffherbizide, Bodenverbesserer bestehend aus:
• geeigneten Mitteln (3) zum Besprühen des genannten Bodens mit genannten flüssigen Substanzen;
• geeigneten Mitteln (8) zum Aufhacken des genannten Bodens und Beimischen in diesen der genannten gesprühten flüssigen Substanzen;
• geeigneten Mitteln (5) zum Kompaktieren der genannten besprühten Erde, so dass eine gepresste Kruste entsteht, welche verhindert, dass die durch Verdünstung der von genannten Mitteln (3) gesprühten flüssigen Substanzen erzeugten Rauche austreten;
**dadurch gekennzeichnet, dass** genannte geeignete Mittel (8) zum Aufhacken des genannten Bodens und zum Beimischen in diesen der genannten gesprühten flüssigen Substanzen eine Verschüttungsvorrichtung einschliessen.

2. Maschine nach Anspruch 1, **dadurch gekennzeichnet, dass** genannte geeignete Mittel (3) zum Besprühen des Bodens vorgelagert zu den genannten geeigneten Mitteln (8) zum Aufhacken des Bodens positioniert sind.

3. Maschine nach Anspruch 1, **dadurch gekennzeichnet, dass** genannte geeignete Mittel (3) zum Besprühen des Bodens durch eine Abdeckung (16), die sie enthält, geschützt sind.

4. Maschine nach Anspruch 2 oder 3, **dadurch gekennzeichnet, dass** sich genannte geeignete Mittel (3) zum Besprühen des Bodens in einem Abstand D von genannten Mitteln (8) zwischen 50 und 500 mm und auf einer Höhe h zum Boden bei Maschine in Ruhestellung zwischen 200 und 450 mm befinden.

5. Maschine nach Anspruch 1, **dadurch gekennzeichnet, dass** genannte geeignete Mittel (3) zum Besprühen des Bodens oberhalb genannter geeigneter Mittel (8) zum Aufhacken des Bodens positioniert sind.

6. Maschine nach Anspruch 1, **dadurch gekennzeichnet, dass** genannte geeignete Mittel (3) zum Besprühen des Bodens zwischen genannten geeigneten Mitteln (8) zum Aufhacken des Bodens und einem hinteren Gitter (12) positioniert sind, in dessen Richtung der aufgehackte Boden geworfen wird.

7. Maschine nach einem der Ansprüche 1 bis 6, **dadurch gekennzeichnet, dass** genannte geeignete Mittel (3) zum Besprühen des Bodens aus einer Mehrzahl von Düsen (15) bestehen, die durch eine Pumpe (6) versorgt sind, welche die in den Boden einzuführende Flüssigkeit von einem Behälter (26) entnimmt und sie unter Druck zu genannter Mehrzahl von Düsen (15) befördert.

8. Maschine nach den Ansprüchen 1 bis 7, **dadurch gekennzeichnet, dass** genannte Mehrzahl von Düsen (15) so angeordnet ist, dass in Richtung der Bodenfräse (8) gesprüht wird.

9. Maschine nach den Ansprüchen 1 bis 7, **dadurch gekennzeichnet, dass** genannte geeignete Mittel (3) zum Besprühen des Bodens auch aus einem Paar seitlicher Düsen (15a) bestehen.

10. Maschine nach den vorhergehenden Ansprüchen, **dadurch gekennzeichnet, dass** genannte geeignete Mittel (5) zum Kompaktieren genannten Bodens und infolgedessen zur Bildung einer gepressten Kruste, welche das Austreten der durch die Verdünstung der von genannten Mitteln (3) gesprühten flüssigen Substanzen erzeugten Rauche verhindert, aus einer Walze (5a) besteht, die am Boden gepresst gehalten wird.

11. Maschine nach Anspruch 10, **dadurch gekennzeichnet, dass** genannte Walze (5a) derart motorisiert ist, dass sie sich in die gleiche Drehrichtung des Rads des Traktors, der sie zieht, dreht.

12. Maschine nach den vorhergehenden Ansprüchen, **dadurch gekennzeichnet, dass** sie auch aus geeigneten Mitteln (4) zum Einstellen des Durchflusses der auf den Boden gesprühten Flüssigkeit besteht.

13. Maschine nach Anspruch 12, **dadurch gekennzeichnet, dass** genannte geeignete Mittel (4) zum Einstellen des Durchflusses der auf den Boden gesprühten Flüssigkeit aus einem Rad (17) bestehen, das auf den Boden gepresst gehalten wird, wobei das genannte Rad geeignet ist, um auf einem Auflager (18) zu schwenken, das derart mit dem Gestell der Maschine verbunden ist, dass bewirkt wird, dass genanntes Rad (17) durch das Eingreifen in den Boden dreht, wenn es von der Maschine gezogen wird, und wobei genanntes Rad mit geeigneten Mitteln verbunden ist, die ein von der Drehungsgeschwindigkeit abhängiges Signal abgeben, wobei genanntes Signal von Mitteln (7) für die computergesteuerte Kontrolle der Maschinenvorgänge gelesen wird.

14. Maschine nach Anspruch 1 oder 12, **dadurch gekennzeichnet, dass** genannte Mittel (7) für die computergesteuerte Kontrolle der Maschinenvorgänge aus einem geeigneten Computer bestehen, der in der Lage ist, die aus genannten geeigneten Mitteln (4) zum Einstellen des Durchflusses der Flüssigkeit für die Versorgung genannter geeigneter Mittel (3) zum Besprühen des Bodens kommenden Signale zu empfangen und zu verarbeiten, um den Durchfluss der zu sprühenden Flüssigkeit zu bestimmen und genannte Pumpe (6) zum Versorgen genannter Düsen (15) und (15a) zu überwachen.

## Revendications

1. Machine pour le traitement de terres agricoles par pulvérisation et incorporation dans le sol de substances liquides comme des produits pour protéger les plantes, herbicides, engrais et traitements du sol, du type comprenant :
• des moyens (3) conçus pour pulvériser ledit sol avec lesdites substances liquides ;
• des moyens (8) conçus pour émotter ledit sol et le mélanger auxdites substances liquides pulvérisées ;
• des moyens (5) conçus pour compacter ledit sol pulvérisé, créant ainsi une croûte compacte qui empêche l'exhalation des vapeurs produites par l'évaporation desdites substances liquides pulvérisées par lesdits moyens (3) ;
**caractérisée par le fait que** lesdits moyens (8) prévus pour émotter la terre et la mélanger avec lesdites substances liquides pulvérisées comprennent une machine pour enterrer les pierres.

2. Machine selon la revendication 1, **caractérisée par le fait que** lesdits moyens (3) conçus pour pulvériser le sol sont placés en amont desdits moyens (8) conçus pour émotter la terre.

3. Machine selon la revendication 1, **caractérisée par le fait que** lesdits moyens (3) conçus pour pulvériser le sol sont protégés par un boîtier (16) qui les contient.

4. Machine selon la revendication 2 ou 3, **caractérisée par le fait que** lesdits moyens (3) conçus pour pulvériser le sol sont à une distance D desdits moyens (8) comprise entre 50 et 500 mm et à une hauteur h, par rapport au niveau du sol, avec la machine arrêtée au dessus du sol, comprise entre 200 et 450 mm.

5. Machine selon la revendication 1, **caractérisée par le fait que** lesdits moyens (3) conçus pour pulvériser le sol sont placés au-dessus des moyens (8) conçus pour émotter la terre.

6. Machine selon la revendication 1, **caractérisée par le fait que** lesdits moyens (3) conçus pour pulvériser le sol sont placés entre lesdits moyens (8) conçus pour émotter la terre et une grille arrière (12) vers laquelle la terre émottée est projeté.

7. Machine selon n'importe quelle des revendications de 1 à 6, **caractérisée par le fait que** lesdits moyens (3) conçus pour pulvériser le sol comprennent plusieurs gicleurs (15) alimentés par une pompe (6) qui prélève le fluide à introduire dans le sol dans un réservoir (26) et l'amène sous pression aux nombreux gicleurs (15).

8. Machine selon les revendications 1 à 7, **caractérisée par le fait que** lesdits nombreux gicleurs (15) sont positionnés de manière à pulvériser vers l'émotteuse (8).

9. Machine selon les revendications 1 et 7, **caractérisée par le fait que** lesdits moyens (3) conçus pour pulvériser le sol comprennent aussi deux gicleurs latéraux (15a).

10. Machine selon n'importe quelle des revendications qui précèdent,
**caractérisée par le fait que** lesdits moyens (5) conçus pour compacter ledit sol, créant ainsi une croûte compacte qui empêche l'exhalation des vapeurs produites par l'évaporation dudit liquide pulvérisé par lesdits moyens (3), comprennent un rouleau (5a) qui est maintenu pressé contre le sol.

11. Machine selon la revendication 10, **caractérisée par le fait que** le rouleau (5a) est entraîné par un moteur de sorte qu'il tourne dans la même direction de rotation que la roue du tracteur qui le tire.

12. Machine selon n'importe quelle des revendications qui précèdent,
**caractérisée par le fait qu'**elle comprend aussi des moyens (4) conçus pour régler le débit du fluide pulvérisé sur le sol.

13. Machine selon la revendication 12, **caractérisée par le fait que** lesdits moyens (4) conçus pour régler le débit du fluide pulvérisé sur le sol comprennent une roue (17) qui est maintenue pressée contre le sol, ladite roue étant fixée pour pivoter sur un support (18) connecté au châssis de la machine, de telle sorte que ladite roue (17) tourne en touchant le sol tandis qu'elle est tirée par la machine, et ladite roue est connectée à des moyens conçus pour émettre un signal dépendant de sa vitesse de rotation, ledit signal étant détecté par les moyens (7) prévus pour le contrôle informatisé du fonctionnement de la machine.

14. Machine selon les revendications 1 ou 12 **caractérisée par le fait que** lesdits moyens (7) prévus pour le contrôle informatisé du fonctionnement de la machine comprennent un ordinateur conçu pour recevoir les signaux provenant desdits moyens (4), conçus pour régler le débit du fluide à alimenter auxdits moyens (3) conçus pour pulvériser le sol, les traiter pour déterminer la vitesse du débit du liquide à pulvériser, et contrôler ladite pompe (6) pour alimenter lesdits gicleurs (15) et (15a).
